# EUROPÄISCHE PATENTSCHRIFT

(11) **EP 2 921 550 B1**
(45) Veröffentlichungstag und Bekanntmachung des Hinweises auf die Patenterteilung: **10.05.2017**
(21) Anmeldenummer: 15158769.8
(22) Anmeldetag: 12.03.2015
(51) Int. Cl.: C12G 3/14, C12G 3/08

(54) **VERFAHREN ZUR REDUZIERUNG DES ALKOHOLGEHALTS VON ALKOHOLHALTIGEN GETRÄNKEN, INSBESONDERE VON BIER**
METHOD FOR REDUCING THE ALCOHOL CONTENT OF ALCOHOLIC BEVERAGES, IN PARTICULAR OF BEER
PROCÉDÉ DE RÉDUCTION DE LA TENEUR EN ALCOOL DE BOISSONS ALCOOLISÉES, EN PARTICULIER LA BIÈRE

(30) Priorität: 19.03.2014 DE 102014003879; 17.10.2014 DE 102014015392
(43) Veröffentlichungstag der Anmeldung: 23.09.2015
(73) Patentinhaber: Fraunhofer-Gesellschaft zur Förderung der angewandten Forschung e.V., 80686 München (DE)
(72) Erfinder: Frankl, Michael, Dipl.-Ing., 81241 München (DE)
(74) Vertreter: Gagel, Roland

(56) Entgegenhaltungen:
- WO-A2-2011/088809
- DE-A1- 4 429 606
- FR-A1- 2 898 362
- GB-A- 124 330
- GB-A- 2 076 852

## Beschreibung

### Technisches Anwendungsgebiet

Die vorliegende Erfindung betrifft ein Verfahren zur Reduzierung des Alkoholgehalts von alkoholhaltigen Getränken, insbesondere von Bier.

### Stand der Technik

Alkoholfreies Bier und Bier mit reduziertem Alkoholgehalt erfreuen sich aufgrund steigender Sensibilität der Verbraucher bezüglich des Alkoholkonsums zunehmender Beliebtheit, obwohl die meisten dieser Getränke noch Reste von Alkohol enthalten und somit nicht vollständig alkoholfrei sind. Ein grundsätzliches Problem bei der Entalkoholisierung und Alkoholreduzierung besteht in der unerwünschten Beeinflussung des ursprünglichen Aromas des Ausgangsprodukts durch den Prozess.

Für die Alkoholreduzierung von Bier haben sich mehrere Verfahren etabliert, die produktspezifisch eingesetzt werden. So kann bereits beim Herstellungsprozess auf eine reduzierte Alkoholbildung geachtet werden. Hierzu wird häufig die Technik der gestoppten Gärung angewendet, die nur einen Teil der vorhandenen Zucker durch spezielle Hefen oder Verfahren zu Alkohol vergären lässt. Dabei verbleiben jedoch Würzecarbonyle im Bier, die zu einem unrunden Biergeschmack und einer geringen Bekömmlichkeit führen. Auch ist die Herstellung eines alkoholarmen Bieres mit einem Alkoholgehalt < 0,05 Vol% mit diesem Verfahren nicht möglich.

Nach dem Brauprozess werden bei Bier auch thermische Verfahren wie Vakuumdestillation oder Vakuumrektifikation eingesetzt, die den Alkohol bei Unterdruck und den damit verbundenen auf bis zu 40°C reduzierten Siedetemperaturen destillativ entfernen. So zeigt bspw. die DE 35 07 150 C1 ein Verfahren zur Entalkoholisierung von Bier, bei dem der Alkohol bei Drücken zwischen 125 und 160 hPa und einer Temperatur des Bieres von 56°C verdampft wird. Bei einem derartigen Verfahren werden mit dem Alkohol jedoch auch viele Aromakomponenten mit ausgetragen, wodurch das Bier einen leeren Geschmack und fehlenden Charakter erhalten kann. Durch die thermische Behandlung können zudem auch neue und untypische Aromastoffe entstehen, wie bspw. Hydroxymethylfurfural, ein Produkt aus der Maillard Reaktion. Weiterhin liegen die produktschonenden Temperaturen von etwa 40 bis 60°C bei der Destillation im Temperaturbereich von optimalem mikrobiellem Wachstum, so dass die Gefahr einer Verkeimung der Produkte während des Prozesses besteht.

Es sind auch Membranverfahren wie Dialyse und Umkehrosmose für die Alkoholreduzierung von Bier bekannt, die den Alkohol über Membranen aufgrund der Molekülgröße oder des osmotischen Drucks entfernen. Ein derartiges Membranverfahren ist bspw. in der DE 36 00 352 A1 beschrieben. Dabei werden neben dem Alkohol bzw. Ethanol auch Wasser, Salze und Aromakomponenten aus dem alkoholhaltigen Getränk oder der Dialysatflüssigkeit abgetrennt, die nach Prozessende vom Ethanol getrennt und dann rückgeführt werden müssen. Damit sind derartige Verfahren jedoch aufwändig und zeigen in der Regel ebenfalls einen deutlichen Verlust an Aromastoffen.

Eine weitere Möglichkeit zur Entalkoholisierung von Bier ist die Desorption, wie sie bspw. in der DE 10 2009 006 843 A1 angewendet wird. Bei der Desorption wird ein Gas durch das alkoholhaltige Produkt geleitet, das den Alkohol aufgrund des Konzentrationsunterschieds zwischen dem Produkt und dem Gas reduziert. Allerdings werden auch hier viele Aromastoffe entfernt und zusätzlich große Mengen an Gas verbraucht.

Die Aufgabe der vorliegenden Erfindung besteht darin, ein Verfahren zur Reduzierung des Alkoholgehalts von alkoholhaltigen Getränken, insbesondere von Bier, anzugeben, das eine Alkoholreduzierung bei geringerem Verlust an Aromastoffen ermöglicht und sich in einfacher Weise durchführen lässt. Insbesondere soll es das Verfahren ermöglichen, den Alkoholgehalt von Bier bis auf eine Restmenge von weniger als 0,05 Vol% zu reduzieren, und dabei eine thermische Belastung vermeiden, die auch zu einer reduzierten Lagerstabilität führt. Der apparative Aufwand für das Verfahren soll möglichst einfach gehalten werden und das gewonnene Produkt im Fall von Bier dem deutschen Reinheitsgebot entsprechen.

### Darstellung der Erfindung

Die Aufgabe wird mit dem Verfahren gemäß Patentanspruch 1 gelöst. Vorteilhafte Ausgestaltungen des Prozessende vom Ethanol getrennt und dann rückgeführt werden müssen. Damit sind derartige Verfahren jedoch aufwändig und zeigen in der Regel ebenfalls einen deutlichen Verlust an Aromastoffen.

Eine weitere Möglichkeit zur Entalkoholisierung von Bier ist die Desorption, wie sie bspw. in der DE 10 2009 006 843 A1 angewendet wird. Bei der Desorption wird ein Gas durch das alkoholhaltige Produkt geleitet, das den Alkohol aufgrund des Konzentrationsunterschieds zwischen dem Produkt und dem Gas reduziert. Allerdings werden auch hier viele Aromastoffe entfernt und zusätzlich große Mengen an Gas verbraucht.

Die FR 2898362 A1 offenbart ein Verfahren zur Reduktion des Alkoholgehaltes alkoholischer Getränke, bei dem das Getränk auf eine Gefriertemperatur gebracht wird, bei dem das Wasser im Wesentlichen in fester Form und der Alkohol im Wesentlichen in flüssiger Form vorliegt. Das bei dieser Temperatur vorliegende Produkt wird dann einer Vakuumverdampfung unterzogen, um zumindest einen Teil der Alkohole zu extrahieren. Die Gefriertemperatur liegt dabei vorzugsweise bei -10°C, der Gasdruck bei weniger als 20 hPa. Hierbei wird ausgenutzt, dass bei den gewählten Parametern lediglich der Alkohol, aber kein Wasser verdampft.

Die DE 4429606 A1 beschreibt ein Verfahren und eine Vorrichtung zur Rückführung von bei thermischer Entalkoholisierung anfallenden Aromastoffen. Bei dem Verfahren erfolgt eine thermische Entalkoholisierung, bei der das alkoholisierte Getränk auf Temperaturen von 42°C oder darüber erwärmt wird. Die dadurch aus dem entalkoholisierten Produkt entfernten Aromastoffe werden zusammen mit den ebenfalls abgeführten Gasen auf einen Druck komprimiert, der über demjenigen des entalkoholisierten Produktes liegt und unter der Löslichkeitsgrenze der Aromastoffe und Gase im entalkoholisierten Produkt. Das komprimierte Gemisch wird dem Produkt dann wieder zugeführt, und in diesem gelöst.

Die Aufgabe der vorliegenden Erfindung besteht darin, ein Verfahren zur Reduzierung des Alkoholgehalts von alkoholhaltigen Getränken, insbesondere von Bier, anzugeben, das eine Alkoholreduzierung bei geringerem Verlust an Aromastoffen ermöglicht und sich in einfacher Weise durchführen lässt. Insbesondere soll es das Verfahren ermöglichen, den Alkoholgehalt von Bier bis auf eine Restmenge von weniger als 0,05 Vol% zu reduzieren, und dabei eine thermische Belastung vermeiden, die auch zu einer reduzierten Lagerstabilität führt. Der apparative Aufwand für das Verfahren soll möglichst einfach gehalten werden und das gewonnene Produkt im Fall von Bier dem deutschen Reinheitsgebot entsprechen.

### Darstellung der Erfindung

Die Aufgabe wird mit dem Verfahren gemäß Patentanspruch 1 gelöst. Vorteilhafte Ausgestaltungen des Verfahrens sind Gegenstand der abhängigen Patentansprüche oder lassen sich der nachfolgenden Beschreibung sowie dem Ausführungsbeispiel entnehmen.

Bei dem vorgeschlagenen Verfahren zur Reduzierung des Alkoholgehalts von alkoholhaltigen Getränken, insbesondere von Bier, wird das alkoholhaltige Getränk zunächst auf eine Ausgangstemperatur unterhalb von 0°C abgekühlt. Das abgekühlte Getränk wird anschließend für einen bestimmten Zeitraum kontinuierlich oder diskontinuierlich in einer Gasatmosphäre einem niedrigen Gasdruck unterhalb von 6,1 hPa ausgesetzt, bei dem Anteile des im Getränk enthaltenen Alkohols bzw. Ethanols und Wassers in die Gasphase übergehen und somit dem alkoholhaltigen Getränk entzogen werden. Bei der Gasatmosphäre kann es sich um Luft handeln oder auch um ein anderes Gas oder eine andere Gasmischung. Das alkoholhaltige Getränk muss hierzu in eine entsprechend vakuumdicht abschließbare Kammer eingebracht oder bereits in einer derartigen Kammer abgekühlt werden. Erfolgt die Abkühlung bereits in einer derartigen Kammer, so wird der Gasdruck nach oder noch während der Abkühlung auf den niedrigen Gasdruck reduziert. Durch diese Reduktion kann auch die Abkühlung selbst oder wenigstens ein Teil der Abkühlung des alkoholhaltigen Getränks auf die Ausgangstemperatur erfolgen. Wird das alkoholhaltige Getränk erst nach der Abkühlung in die Kammer eingebracht, so kann dort der niedrige Gasdruck bereits eingestellt sein oder auch erst nach Einbringen des abgekühlten Getränks eingestellt werden. Durch den niedrigen Gasdruck (Absolutdruck) in der Kammer verdunstet und/oder sublimiert - je nach Temperatur und Zusammensetzung des Getränks und Druck in der Kammer - ein Teil des in dem Getränk enthaltenen Alkohols und Wassers und geht in die Gasphase über. Die in der Gasatmosphäre dadurch vorliegenden Anteile des Alkohols und des Wassers werden während dieser Verdunstungs- oder Sublimationsphase - zumindest teilweise - kontinuierlich oder diskontinuierlich aus der Gasatmosphäre abgetrennt. Dies kann mittels Kondensation oder Desublimation bei Temperaturen unterhalb der Kondensations- oder Sublimationstemperatur der Gasphase dieser Anteile erfolgen, wodurch die Anteile in flüssiger oder fester Form aufgefangen werden. Das Maß der Alkoholreduzierung kann über den Zeitraum eingestellt werden, über den das abgekühlte Getränk dem niedrigen Gasdruck in der Kammer, im Folgenden auch als Verdunstungskammer bezeichnet, ausgesetzt wird. Für eine deutliche Alkoholreduzierung wird hierfür vorzugsweise ein Zeitraum von mindestens 60 Minuten gewählt.

Überraschenderweise zeigt sich, dass auch bei einem derartigen Prozess bei niedrigen Temperaturen unterhalb von 0°C durch Verdunstung und/oder Sublimation ein erheblicher Anteil des Alkohols vom alkoholhaltigen Getränk abgetrennt werden kann, auch wenn absolut nur wenige Mass% des Getränkes in die Gasphase überführt werden. Gleichzeitig ergibt sich aufgrund der niedrigen Temperaturen nur ein geringer Verlust an Aromastoffen. Das Verfahren ermöglicht damit die Reduzierung des Alkoholgehalts eines alkoholhaltigen Getränks bei geringerem Verlust an Aromastoffen als dies bei den bekannten Verfahren des Standes der Technik der Fall ist. Insbesondere lässt sich mit dem Verfahren bspw. der Alkoholgehalt von Bier bis auf eine Restmenge von weniger als 0,05 Vol% ohne eine thermische Belastung des Bieres erniedrigen. Der apparative Aufwand für die Durchführung des Verfahrens ist gering.

Vorzugsweise wird das Getränk bei dem vorgeschlagenen Verfahren auf eine Ausgangstemperatur von unter -2°C abgekühlt.

In einer vorteilhaften Ausführungsform wird das alkoholhaltige Getränk so abgekühlt, dass wenigstens Anteile des im Getränk vorhandenen Wassers im gefrorenen Zustand vorliegen, wenn das Getränk dem niedrigen Gasdruck ausgesetzt wird. Besonders vorteilhaft und schonend für die vorhandenen Aromen erweist es sich, wenn das Wasser im Getränk zu mehr als 90 Mass% gefroren ist und nur geringe Anteile zusammen mit dem Alkohol als Flüssigkeit vorliegen. Bei Anteilen an gefrorenem Wasser oberhalb von 90 Mass% ist der Aromaverlust im Vergleich zu einem abgekühlten Getränk, das keine gefrorenen Wasseranteile enthält, erheblich reduziert. Die Steuerung des Anteils an gefrorenem Wasser im abgekühlten Getränk wird dabei in bekannter Weise über die Temperatur des Getränks gesteuert. Durch den niedrigen Gasdruck von unter 6,1 hPa in der Verdunstungskammer wird bei Vorliegen von gefrorenen Anteilen an Wasser im Getränk eine ausreichende Sublimation der gefrorenen Anteile erreicht.

Es ist auch möglich, das alkoholische Getränk als Eissuspension oder als vollständig gefrorenes Getränk, bspw. in Form einer Masse aus entsprechend gefrorenen Partikeln, in die Verdunstungskammer einzubringen. Liegt das alkoholhaltige Getränk bei der Ausgangstemperatur in vollkommen flüssiger Form vor, so kann je nach Druckabsenkung in der Kammer ein Teil der Flüssigkeit durch die Druckabsenkung zu Eis gefrieren.

In einer vorteilhaften Ausgestaltung wird aus dem alkoholhaltigen Getränk zunächst eine Eissuspension oder Masse an Eispartikeln erzeugt die dann in der Gasatmosphäre bzw. Verdunstungskammer dem niedrigen Druck ausgesetzt wird. Dies sorgt für eine optimierte Abtrennung des Alkohols innerhalb der Verdunstungskammer aufgrund der kurzen Diffusionswege, die besonders bei kleinen Eisagglomeraten gegeben sind. Für die Erfindung vorteilhafte Eispartikel mit kurzen Diffusionswegen können z. B. durch Verwendung von Schabewärmetauschern, mit Eismaschinen oder durch Erzeugung von Schneekristall mittels Flash-Vereisung gewonnen werden.

Aufgrund der Abkühlung des alkoholhaltigen Getränkes auf eine Ausgangstemperatur unterhalb von 0° C, bei der auch eine Eisphase im Getränk vorliegt, wird der Prozess beim vorliegenden Verfahren unterhalb des Druckes des Tripelpunktes von Wasser, d.h. unterhalb von 6,1 hPa durchgeführt. Das vorgeschlagene Verfahren basiert somit auf einer aus der Gefriertrocknungstechnologie bekannten Verfahrensführung, bei der bekannterweise nur geringe Mengen an Aromastoffen verloren gehen.

Über die Geschwindigkeit des Einfriervorgangs, die Konsistenz und Größe der Eispartikel, die Größe des Vakuums, die Temperatur, den vorzugsweise vorgenommenen Wärmeeintrag in der Verdunstungskammer sowie die Verweilzeit bei dem niedrigen Gasdruck kann das Verhältnis zwischen der Verdunstung des Alkohols bzw. Ethanols und dem Verlust an Aromastoffen beeinflusst werden. Auf diese Weise lässt sich das Verfahren im Hinblick auf geringste Aromaverluste optimieren.

Zur Verkürzung des für eine bestimmte Alkoholreduzierung erforderlichen Zeitraums, während dem das abgekühlte Getränk dem niedrigen Druck in der Verdunstungskammer ausgesetzt werden muss, erfolgt vorzugsweise eine Nachheizung des abgekühlten Getränks in der Verdunstungskammer. Diese Nachheizung kann durch einen entsprechenden Wärmeeintrag in die Verdunstungskammer, bspw. über entsprechende Heizelemente in der Wandung der Verdunstungskammer, erfolgen. Über eine derartige Nachheizung wird die Temperatur des abgekühlten Getränks vorzugsweise auf einer Temperatur konstant gehalten, die der Ausgangstemperatur entspricht oder auch unterhalb der Ausgangstemperatur liegen kann. Damit wird eine weitere Abkühlung aufgrund des Verdunstungs- oder Sublimationsprozesses verhindert, die zu einer Verlangsamung des Verdunstungsprozesses führt.

Das abgekühlte Getränk wird während des Zeitraums in der Verdunstungskammer vorzugsweise ein- oder mehrfach umgewälzt, insbesondere durch mechanischen Energieeintrag mit einer entsprechenden Mischeinrichtung. Durch diese mehrfache Umwälzung, die vorzugsweise kontinuierlich erfolgt, wird im Falle gefrorener Anteile eine homogene Temperaturverteilung erreicht.

Für die Rückgewinnung der wenigen höchstflüchtigen Aromakomponenten, die aufgrund von tieferen Siedepunkten oder höheren Dampfdrücken als Ethanol verdunsten, bestehen beim vorgeschlagenen Verfahren mehrere Möglichkeiten. Ebenso wie die bei der Gefriertrocknung eingesetzten Eiskondensatoren, die das verdunstete Wasser aus dem Dampfraum des Gefriertrockners entfernen, kann eine Kolonne aus mehreren in Reihe geschalteten Kühlfallen im Vakuumbereich in der Zuleitung zur Vakuumpumpe eingesetzt werden. Nachdem Wasser und Ethanol ausgefroren sind, können die verbleibenden Aromakomponenten entweder ebenso ausgefroren werden oder aber nach der Vakuumpumpe bei Atmosphärendruck in einem Waschbehälter mit kaltem Wasser ausgewaschen werden. Diese abgetrennten Aromastoffe können dann dem alkoholreduzierten Getränk wieder zugeführt werden.

### Kurze Beschreibung der Zeichnungen

Das vorgeschlagene Verfahren wird nachfolgend anhand eines Ausführungsbeispiels in Verbindung mit der Zeichnung nochmals näher erläutert. Hierbei zeigt:

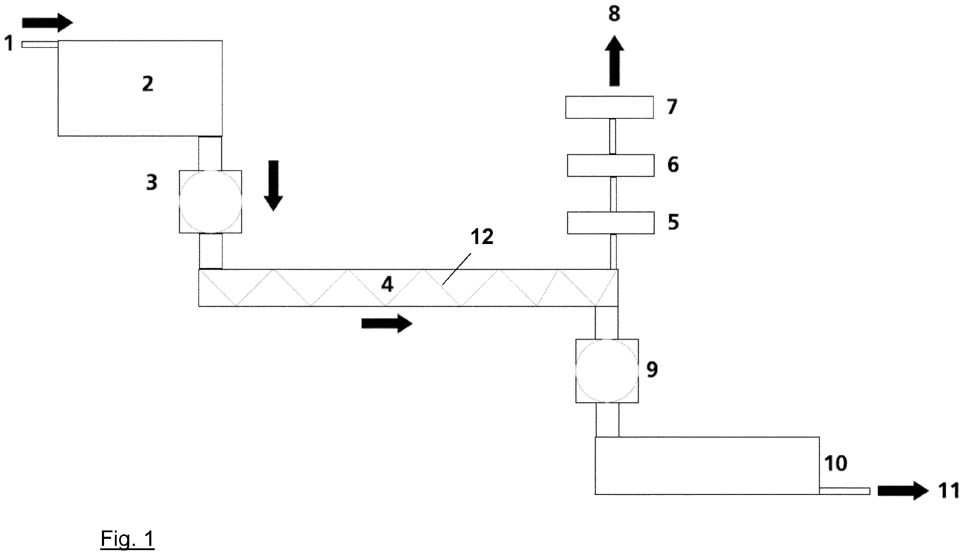

Fig. 1 ein Verfahrensfließbild einer Ausführungsform des vorgeschlagenen Verfahrens.

### Wege zur Ausführung der Erfindung

Im Folgenden wird eine Ausgestaltung des vorgeschlagenen Verfahrens nochmals näher erläutert, bei der eine kontinuierliche Entalkoholisierung von alkoholischen Getränken durch partielle Gefrierverdunstung erfolgt. Das Verfahren wird im Folgenden anhand der Alkoholreduzierung von Bier beispielhaft erläutert.

Das Verfahren umfasst mehrere Prozessschritte, die in diesem Beispiel einen kontinuierlichen Betrieb zur Abtrennung von Ethanol aus Bier unterhalb des Siedepunkts von Wasser ermöglichen. Das Bier wird dabei auf eine Temperatur < 0°C abgekühlt und, eventuell entgast, in einen Eiserzeuger 2 eingebracht, der möglichst kleine Eispartikel erzeugt. In der Figur 1 ist hierbei der Zulauf 1 für das gekühlte Produkt in den Eiserzeuger 2 zu erkennen. Unter Atmosphärendruck kann als Eiserzeuger ein Schabewärmetauscher oder eine Scherbeneismaschine eingesetzt werden. Es ist auch möglich, den Vorgang des Einfrierens bereits im Vakuum durchzuführen.

Zur Vermeidung eines Aufschäumens des Bieres ist es vorteilhaft, das Bier durch Ausfrieren zu verfestigen, bevor das Vakuum angelegt wird. Dabei sollte der Feststoffanteil in der Eis-Flüssigkeits-Mischung möglichst groß gewählt werden. Allerdings ist es selbstverständlich dennoch möglich und vielfach auch vorteilhaft, einen Flash-Vereiser bzw. Schneeerzeuger einzusetzen, in dem ein Vakuum vorteilhaft unterhalb von 6 hPa anliegt, so dass das eingebrachte Produkt schlagartig durch die Verdunstungskälte zu kleinsten Eispartikeln oder Schnee gefriert.

Das entstandene Eis wird dann über eine gasdichte Schleuse 3, im vorliegenden Beispiel eine Vakuum-Zellradschleuse, in die Vakuumverdunstungskammer 4 eingebracht, in der es während des gesamten Verdunstungs-/Sublimationsprozesses verbleibt. Grundsätzlich ist es auch möglich, durch entsprechend große Dimensionierung des Flashvereisers bzw. Schneeerzeugers die Verweilzeit so zu steigern, dass der Alkohol bereits im Vereiser/Schneeerzeuger soweit abgetrennt wird, dass ein Einbringen in eine separate Verdunstungskammer nicht mehr erforderlich wird. Der Innenraum des Flashvereisers bzw. Schneeerzeugers stellt dann die Verdunstungskammer dar.

Besonders vorteilhaft ist es, wenn die Verdunstungskammer 4, wie im Beispiel der Figur 1, über eine Mischeinrichtung 12 verfügt, die in der Figur angedeutet ist. Die Verdunstungskammer kann horizontal oder vertikal eingesetzt werden. Bei einer vertikal eingesetzten Verdunstungskammer kann die Mischeinrichtung beispielsweise durch ein Rührwerk gebildet sein, bei einer horizontal eingesetzten Verdunstungskammer wie im Beispiel der Fig. 1 kann es sich bei der Mischeinrichtung bspw. um eine Schnecke oder eine ähnliche Einrichtung handeln. Die Mischeinrichtung 12 ist vorzugsweise so ausgebildet, dass sie eine geringe aber konstante Bewegung der Einspartikel erzeugt und dadurch eine Homogenisierung der Temperaturverteilung erreicht. Hierbei sollte vorzugsweise eine Dicke der Eispartikel von < 5 mm nicht überschritten werden, d. h. die Eispartikel sollten immer kleiner als 5 mm bleiben. Besonders vorteilhaft ist die Bereitstellung von Eis mit Partikeldicken von ≤ 2 mm. Für reproduzierbare Ergebnisse ist eine konstante Verweilzeit der Eispartikel im Verdunstungsbehälter 4 vorteilhaft, wie sie z. B. durch eine fördernde und mischende Schnecke als Mischeinrichtung 12 in einem länglichen Behälter als Verdunstungskammer 4, wie bei Figur 1, erreicht werden kann. Prinzipiell können die Eispartikel schubweise in die Verdunstungskammer eingebracht werden, dort für den erforderlichen Zeitraum verbleiben und anschließend wieder schubweise aus der Verdunstungskammer abtransportiert werden. Es ist auch möglich, wie im vorliegenden Beispiel durch eine entsprechende mischende Fördereinrichtung einen kontinuierlichen Durchlauf des gefrorenen Getränkes bzw. der Eispartikel durch die Verdunstungskammer 4 zu erreichen. Die Länge der Verdunstungskammer 4 sowie die Fördergeschwindigkeit sind dabei so angepasst, dass die Eispartikel beim Transport jeweils den erforderlichen Zeitraum in der Verdunstungskammer 4 verbleiben.

Eine optionale, regelbare Beheizung der Verdunstungskammer, vorzugsweise einer Doppelwand der Verdunstungskammer, ermöglicht es, die Verdunstungs- bzw. Sublimationskälte zu kompensieren und die Temperatur des Getränks in der Verdunstungskammer konstant zu halten. Die zur Verdunstung notwendige Energie kann vorteilhaft auch ausschließlich über den Zulauf des Getränkes bzw. Bieres eingebracht werden, wobei die Alkoholabtrennung dann nur über die Absenkung des Druckes gesteuert wird.

Am Ende der Verdunstungskammer 4 befindet sich erneut eine gasdichte Schleuse 9, auch in diesem Beispiel eine Vakuum-Zellradschleuse, die das gefrorene entalkoholisierte Produkt in einen nachgeschalteten Behälter 10 zum Schmelzen der Eispartikel fördert. Das in diesem Behälter 10 wieder verflüssigte entalkoholisierte Produkt bzw. Bier wird dann über den Ablauf 11 abgezogen.

An der Verdunstungskammer 4 befindet sich auch der Anschluss der Vakuumpumpe 7, dem in diesem Beispiel zwei Eiskondensatoren 5, 6 vorgeschaltet sind. An diesen Eiskondensatoren 5, 6 werden die verdunsteten Komponenten, insbesondere Wasser, Alkohol und ein Teil der ebenfalls verdunsteten Aromastoffe, ausgefroren und aus dem Gasraum der Verdunstungskammer 4 entfernt. Dadurch wird der Konzentrationsgradient zwischen dem Produkt und dem Gasraum hoch gehalten und somit die treibende Kraft der Verdunstung erhalten. Die Eiskondensatoren 5, 6 können durch Dimensionierung und gewählte Kühlmitteltemperatur so angepasst werden, dass bspw. schwerer flüchtige Aromastoffe und Wasser am ersten Eiskondensator 5 gefrieren und Ethanol am zweiten Eiskondensator 6. Hochflüchtige Aromastoffe passieren beide Kondensatoren und werden entweder in einem hier nicht dargestellten getrennten Bereich zur Rückgewinnung ausgefroren oder in einem Wäscher nach der Vakuumpumpe in kaltem Wasser aufgefangen. Bezugszeichen 8 zeigt hierbei die Abluft, die dann auch die hochflüchtigen Aromastoffe enthält. Je nach Alkoholkonzentration im Ausgangsprodukt und Wert der Restalkoholmenge im Endprodukt kann eine Alkoholkonzentration von bis zu 30% im Kondensat erhalten werden.

Mit einer derartigen Verfahrensführung konnte z. B. aus Vollbier mit einem Ethanolgehalt von 5,1 Vol% bei einer Ausgangstemperatur von -12° innerhalb von 90 Minuten eine Überführung von 8 Mass% des Bieres bzw. der darin enthaltenen Alkohol- und Wasserkomponenten, in die Gasphase gemessen werden. Der Alkoholgehalt im Rückstand konnte dadurch um 69% reduziert und damit der Alkoholgehalt des Rückstands auf einen absoluten Wert von 1,25 Vol% abgesenkt werden.

Der Vorteil des Verfahrens ist bei geringen Alkoholkonzentrationen des alkoholhaltigen Getränks besonders ausgeprägt. So konnte mit dem Verfahren bei einem Bier mit einem Alkoholgehalt von 0,5 Vol%, das bei einer Temperatur von -12° C für 180 Minuten behandelt wurde, zwar ein Verlust von nur 10 Mass% des Bieres gemessen werden. Der Alkoholgehalt im verbleibenden Rückstand war dadurch jedoch um 90% reduziert und damit der Alkoholgehalt des Rückstands auf einen absoluten Wert von unter 0,05 Vol% abgesenkt.

Durch Zugabe der abgetrennten Menge an Wasser konnte die ursprüngliche Masse des Bieres wieder eingestellt werden. Nach Karbonisierung dieses alkoholarmen Bieres konnte ein Getränk gewonnen werden, das annähernd die gleichen sensorischen Eigenschaften und Aromanoten aufwies, wie das Bier vor der Behandlung. Zudem konnte die Entstehung von thermisch induzierten und sensorisch unerwünschten Komponenten, wie Hydroxymethylfurfural vermieden werden. Auch der Verlust an biereigenen Aromen war durch diese Art der Verfahrensführung deutlich reduziert.

### Bezugszeichenliste

- 1: Zulauf gekühltes Produkt
- 2: Eiserzeugung
- 3: Vakuum-Zellradschleuse
- 4: Verdampfungskammer
- 5: Kondensator Wasser und Aromastoffe
- 6: Kondensator Ethanol
- 7: Vakuumpumpe
- 8: Abluft
- 9: Vakuum-Zellradschleuse
- 10: Schmelzzone
- 11: Ablauf und alkoholisiertes Produkt
- 12: Mischeinrichtung

## Patentansprüche

1. Verfahren zur Reduzierung des Alkoholgehalts von alkoholhaltigen Getränken, insbesondere von Bier, bei dem
- das alkoholhaltige Getränk zunächst auf eine Ausgangstemperatur unterhalb von 0°C abgekühlt wird,
- das auf die Ausgangstemperatur abgekühlte Getränk anschließend für einen Zeitraum kontinuierlich oder diskontinuierlich in einer Gasatmosphäre einem niedrigen Gasdruck unterhalb von 6,1 hPa ausgesetzt wird, bei dem Anteile von im alkoholhaltigen Getränk enthaltenem Alkohol und Wasser in die Gasphase übergehen und somit dem alkoholhaltigen Getränk entzogen werden, und
- die in die Gasphase übergegangenen Anteile des im alkoholhaltigen Getränk enthaltenen Alkohols und Wassers kontinuierlich oder diskontinuierlich aus der Gasatmosphäre abgetrennt werden.

2. Verfahren nach Anspruch 1,
**dadurch gekennzeichnet,**
**dass** bei der Abkühlung aus dem alkoholhaltigen Getränk eine Eissuspension oder eine Masse an Eispartikeln erzeugt wird, die dann in der Gasatmosphäre dem niedrigen Gasdruck ausgesetzt wird.

3. Verfahren nach Anspruch 1 oder 2,
**dadurch gekennzeichnet,**
**dass** das alkoholhaltige Getränk so abgekühlt wird, dass mindestens ein Anteil von 90 Gew.% des im alkoholhaltigen Getränk enthaltenen Wassers gefroren ist.

4. Verfahren nach einem der Ansprüche 1 bis 3,
**dadurch gekennzeichnet,**
**dass** das auf die Ausgangstemperatur abgekühlte Getränk zumindest zeitweise durch Nachheizung auf der Ausgangs- oder einer darunter liegenden Prozesstemperatur gehalten wird, während es in der Gasatmosphäre dem niedrigen Gasdruck ausgesetzt ist.

5. Verfahren nach einem der Ansprüche 1 bis 4,
**dadurch gekennzeichnet,**
**dass** das auf die Ausgangstemperatur abgekühlte Getränk ein- oder mehrfach umgewälzt wird, während es in der Gasatmosphäre dem niedrigen Gasdruck ausgesetzt ist.

6. Verfahren nach einem der Ansprüche 1 bis 5,
**dadurch gekennzeichnet,**
**dass** die Abtrennung der Anteile des in die Gasphase übergegangenen Alkohols und Wassers durch einen oder mehrere hintereinander geschaltete Eiskondensatoren erfolgt.

7. Verfahren nach einem der Ansprüche 1 bis 6,
**dadurch gekennzeichnet,**
**dass** ein Anteil hochflüchtiger Aromastoffe, die aus dem alkoholhaltigen Getränk in die Gasphase übergegangen sind, getrennt vom Alkohol aus der Gasatmosphäre abgetrennt und dem alkoholhaltigen Getränk nach der Alkoholreduzierung wieder zugeführt werden.

8. Verfahren nach Anspruch 7,
**dadurch gekennzeichnet,**
**dass** die Abtrennung des Anteils der in die Gasphase übergegangenen hochflüchtigen Aromastoffe durch Ausfrieren oder Auswaschen erfolgt.

9. Verfahren nach einem der Ansprüche 1 bis 8,
**dadurch gekennzeichnet,**
**dass** ein durch die Alkoholreduzierung entstandener Masseverlust des alkoholhaltigen Getränkes durch Zugabe von Wasser ausgeglichen wird.

10. Verfahren nach einem der Ansprüche 1 bis 9,
**dadurch gekennzeichnet,**
**dass** das alkoholhaltige Getränk nach der Alkoholreduzierung wieder vollständig verflüssigt und anschließend karbonisiert wird.

## Claims

1. Method for reducing the alcohol content of alcoholic beverages, especially beer, in which:
- the alcoholic beverage is first cooled to a starting temperature below 0 °C,
- having been cooled to the starting temperature, the beverage is then exposed continuously or intermittently to a low gas pressure, below 6.1 hPa in a gas atmosphere, at which fractions of alcohol and water contained in the alcoholic beverage transform into the gas phase and are thus extracted from the alcoholic beverage, and
- the fractions of alcohol and water contained in the alcoholic beverage that transformed into the gas phase are continuously or intermittently separated out of the gas atmosphere.

2. Method according to claim 1,
**characterised in that**
an ice suspension or a mass of ice particles is produced from the alcohol-containing beverage during cooling, and is then exposed to the low gas pressure in the gas atmosphere.

3. Method according to claim 1 or 2,
**characterised in that**
the alcoholic beverage is cooled in such manner that at least a fraction 90% by weight water contained in the alcohol-containing beverage is frozen.

4. Method according to any one of claims 1 to 3,
**characterised in that**
having been cooled to the starting temperature, the beverage is kept at the starting temperature or at a process temperature lower than said starting temperature at least for a period by post-heating while it is exposed to the low gas pressure in the gas atmosphere.

5. Method according to any one of claims 1 to 4,
**characterised in that**
having been cooled to the starting temperature, the beverage is circulated one or more times while it is exposed to the low gas pressure in the gas atmosphere.

6. Method according to any one of claims 1 to 5,
**characterised in that**
the fractions of alcohol and water that have transformed into the gas phase are separated in one or more consecutively connected ice condensers.

7. Method according to any one of claims 1 to 6,
**characterised in that**
a fraction of highly volatile flavouring agents which have transformed into the gas phase from the alcoholic beverage are isolated from the gas atmosphere separately from the alcohol and reintroduced into the alcohol-containing beverage after the alcohol reduction process.

8. Method according to claim 7,
**characterised in that**
the fraction of highly volatile flavouring agents which have transformed into the gas phase is isolated by freezing out or washing out.

9. Method according to any one of claims 1 to 8,
**characterised in that**
a loss of mass induced by the reduction of alcohol in the alcoholic beverage is compensated by addition of water.

10. Method according to any one of claims 1 to 9,
**characterised in that**
after the alcohol reduction process the alcohol-containing beverage is completely liquefied again and then carbonated.

## Revendications

1. Procédé de réduction de la teneur en alcool de boissons alcoolisés, notamment de la bière, dans lequel
- la boisson alcoolisée est tout d'abord refroidie à une température de départ au-dessous de 0°C,
- la boisson refroidie à la température de départ est exposée pendant une durée temporelle de manière continue ou discontinue dans une atmosphère de gaz à une pression de gaz basse inférieure à 6,1 hPa, dans lequel les fractions d'alcool et d'eau contenues dans la boisson alcoolisée sont transférées à la phase gazeuse et donc extraites de la boisson alcoolisée, et
- les fractions transférées à la phase gazeuse de l'alcool et l'eau contenus dans la boisson alcoolisée sont séparées de manière continue ou discontinue de l'atmosphère de gaz.

2. Procédé selon la revendication 1, **caractérisé en ce que** lors du refroidissement une suspension de glace ou une masse de particules de glace est produite à partir de la boisson alcoolisée, qui est ensuite exposée dans l'atmosphère de gaz à la pression de gaz basse.

3. Procédé selon la revendication 1 ou 2, **caractérisé en ce que** la boisson alcoolisée est refroidie de sorte qu'au moins une fraction de 90% en poids de l'eau contenue dans la boisson alcoolisée soit congelée.

4. Procédé selon une des revendications 1 à 3, **caractérisé en ce que** la boisson refroidie à la température de départ est maintenue au moins ponctuellement par réchauffement à la température de départ ou une température de processus inférieure, alors que elle est exposée dans l'atmosphère de gaz à la basse pression de gaz.

5. Procédé selon une des revendications 1 à 4, **caractérisé en ce que** la boisson refroidie à la température de départ est agitée une ou plusieurs fois, alors qu'elle est exposée dans l'atmosphère de gaz à la basse pression de gaz.

6. Procédé selon une des revendications 1 à 5, **caractérisé en ce que** la séparation des fractions de l'alcool et l'eau transférés dans la phase gazeuse est effectuée par une ou plusieurs condensateurs de glace branchés les uns derrière les autres.

7. Procédé selon une des revendications 1 à 6, **caractérisé en ce que** une fraction d'agents aromatisants hautement volatiles, qui sont transférés à partir de la boisson alcoolisée à la phase gazeuse, sont séparés de l'atmosphère de gaz séparément de l'alcool et sont réintroduites dans la boisson alcoolisée après la réduction d'alcool.

8. Procédé selon la revendication 7, **caractérisé en ce que** la séparation de la fraction des agents aromatisants hautement volatiles transférés à la phase gazeuse est effectuée par congélation ou lixiviation.

9. Procédé selon une des revendications 1 à 8, **caractérisé en ce que** une perte de masse de la boisson alcoolisée produite par la réduction d'alcool est harmonisée par addition d'eau.

10. Procédé selon une des revendication 1 à 9, **caractérisé en ce que** la boisson alcoolisée est de nouveau totalement liquéfiée et ensuite gazéifiée après la réduction d'alcool.
